# EUROPÄISCHE PATENTANMELDUNG

(11) **EP 1 232 815 A1**
(43) Veröffentlichungstag der Anmeldung: **21.08.2002**
(21) Anmeldenummer: 02003187.8
(22) Anmeldetag: 18.02.2002
(51) Int. Cl.: B23B 51/02

(54) **Bohrer mit Bohrkopf aus Hartmetall**

(30) Priorität: 19.02.2001 DE 20102914 U
(71) Anmelder: Berner GmbH, 74653 Künzelsau (DE)
(72) Erfinder: Erich Runge, D-74653 Künzelsau (DE)
(74) Vertreter: Sties, Jochen, Dipl.-Ing.

(57) **Zusammenfassung**

Ein Bohrer (10) mit einem Bohrerschaft (14) aus Metall und einem Bohrkopf (12) aus Hartmetall, der mit dem Bohrerschaft stoffschlüssig verbunden ist, wobei an der Mantelfläche des Bohrerschafts eine Transportschnecke (32) zur Abfuhr von zerkleinertem Bohrgut ausgebildet ist, ist dadurch gekennzeichnet, daß sich die Transportschnecke (32) bis auf den Bohrkopf (12) erstreckt.

## Beschreibung

Die Erfindung betrifft einen Bohrer mit einem Bohrerschaft und einem Bohrkopf, der aus Hartmetall besteht und mit dem Bohrerschaft stoffschlüssig verbunden ist, wobei an der Mantelfläche des Bohrers eine Transportschnecke zur Abfuhr von zerkleinertem Bohrgut ausgebildet ist.

In der DE-43 39 245 A1 ist ein derartiger Bohrer mit einem Bohrkopf gezeigt, der an seinem freien Ende mit radial verlaufenden Schneiden ausgestattet und auf den Bohrerschaft aufgeschweißt oder aufgelötet ist. Im Bohrkopf sind hinter den Schneiden Ausnehmungen vorgesehen, die von ebenen, in Längsrichtung des Bohrkopfes verlaufenden Ableitflächen begrenzt sind und dem Durchtritt des von den Schneiden zerkleinerten Bohrgutes dienen. Am Bohrerschaft ist eine Transportschnecke ausgebildet, die für den Transport des Bohrgutes sorgt. Dabei münden die von der Transportschnecke gebildeten Nuten in die Ausnehmungen am Bohrkopf Bei diesem Bohrer besteht das Problem, daß das Bohrgut nicht optimal abtransportiert wird. Dadurch entsteht am Bohrkopf, insbesondere im Bereich der geraden Oberflächen, eine erhöhte Reibung und damit verbunden eine starke Erwärmung des Bohrers.

Aufgabe der Erfindung ist es, einen Bohrer mit Hartmetallbohrkopf zu schaffen, der eine verbesserte Bohrgutabfuhr bietet.

Zu diesem Zweck ist bei einem Bohrer der eingangs genannten Art vorgesehen, daß sich die Transportschnecke bis auf den Bohrkopf erstreckt. Somit erstreckt sich die Transportschnecke über die Verbindungsstelle zwischen Bohrerschaft und Bohrkopf hinweg, so daß das Bohrgut schon im Bereich des Bohrkopfes besser abgeführt wird. Damit wird verhindert, daß sich das Bohrgut hinter den Schneiden staut und eine erhöhte Reibung verursacht.

Weitere vorteilhafte Ausführungen der Erfindung ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in welchen zeigt:
- Figur 1 eine Ansicht eines erfindungsgemäßen Bohrers;
- Figur 2 eine Ansicht des Bohrkopf des Bohrers aus Figur 1;
- Figur 3 einen Querschnitt durch den Bohrkopf aus Figur 2 entlang der Linie III in Figur 2;
- Figur 4 eine Ansicht des Bohrerschaftes des Bohrers aus Figur 1 aus einem ersten Blickwinkel; und
- Figur 5 eine Ansicht des Bohrerschaftes des Bohrers aus Figur 1 aus einem zweiten Blickwinkel.

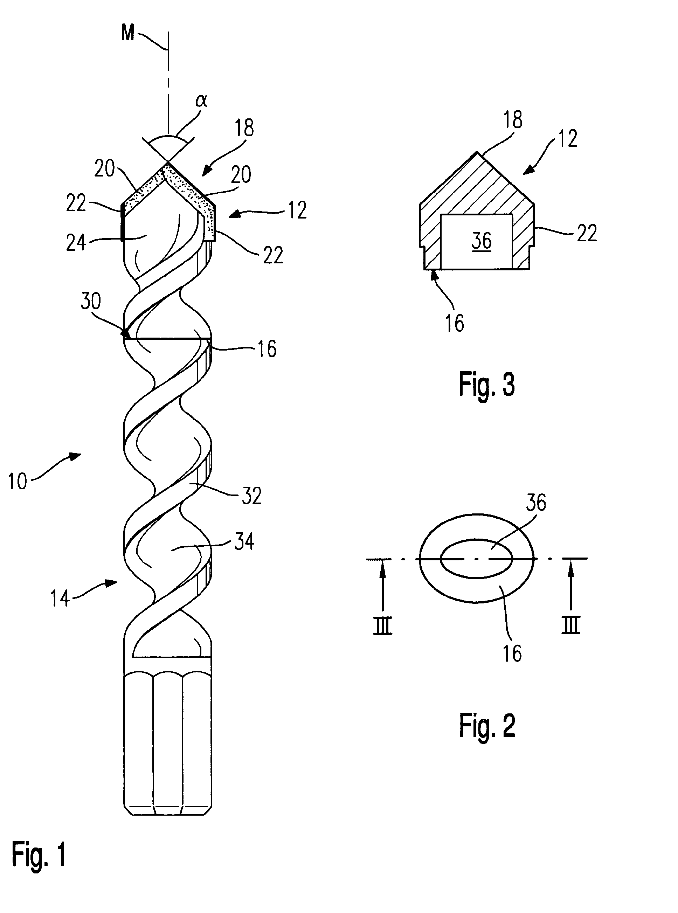

Der in Figur 1 dargestellte Bohrer 10 ist ein Gesteinsbohrer und weist einen Bohrkopf 12 aus Hartmetall und einen Bohrerschaft 14 aus Metall auf Der Bohrkopf 12 besteht aus einem im wesentlichen zylindrischen Grundkörper mit einer an den Bohrerschaft 14 grenzenden Grundfläche 16 und einem gegenüberliegenden freien Ende 18. Am freien Ende 18 des Bohrkopfes 12 sind radial verlaufende Hauptschneiden 20 ausgebildet, die sich etwa von der Spitze des Bohrers 10 unter einem Spitzenwinkel α bis zum Rand des Bohrkopfes erstrecken, wo sie auf parallel zur Längsachse M verlaufenden Nebenschneiden 22 treffen. Vorzugsweise ragen die Nebenschneiden 22 über die Einhüllende des Bohrers hinaus, damit zwischen Bohrerschaft 14 und Bohrloch keine Reibung auftritt. Im Grundkörper sind von der Bohrerspitze aus betrachtet hinter den Schneiden Ausnehmungen 24 vorgesehen, die das von den Schneiden 20, 22 zerkleinerte Bohrgut aufnehmen.

Der Bohrerschaft 14 hat einen langgestreckten zylindrischen Körper mit einer Stirnfläche 30 am einen Ende, während das gegenüberliegende Ende als Einsteckende zur Aufnahme in einem Bohrfutter ausgebildet ist, beispielsweise als Sechskant.

Der Bohrkopf 12 und der Bohrerschaft 14 sind an der Grundfläche 16 bzw. der Stirnfläche 30 stoffschlüssig miteinander verbunden, insbesondere durch Kleben, Schweißen oder Löten. An der Mantelfläche des Bohrers 10 ist eine Transportschnecke 32 ausgeformt, die sich vom Rand der Schneiden 20 ausgehend entlang des Bohrkopfes 12 und des Bohrerschaftes 14 über die zwischen der Grundfläche 16 und der Stirnfläche 30 gebildete Verbindungsstelle zwischen Bohrkopf 12 und Bohrerschaft 14 hinweg erstreckt. Dabei können die Nebenschneiden 22 vorteilhaft Bestandteil der Transportschnecke 32 sein. Die Transportschnecke 32 bildet eine wendelförmige Nut 34 zur Abfuhr des von den Schneiden zerkleinerten Bohrgutes aus den Ausnehmungen 24.

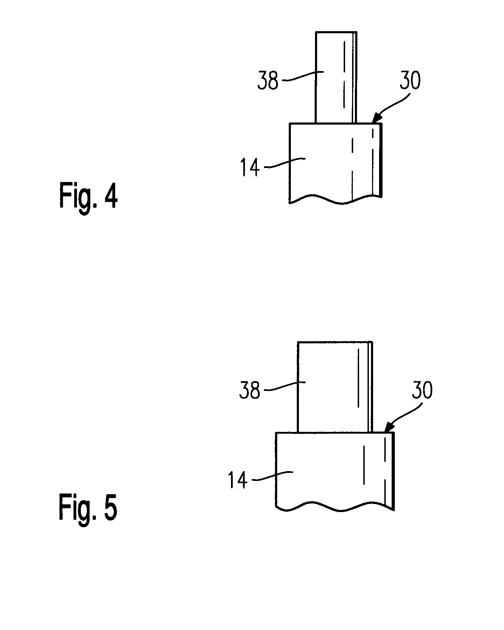

Vorzugsweise ist im Bohrkopf 12 an der Grundfläche 16 eine zur Längsachse M zentrische Bohrung 36 (Figuren 2 und 3) vorgesehen. In diese Bohrung 36 greift ein entsprechend ausgebildeter Zapfen 38 (Figuren 4 und 5) ein, der aus der Stirnfläche 30 des Bohrerschaftes 14 hervortritt. Damit ist die Kontaktfläche für die stoffschlüssige Verbindung zwischen Bohrkopf 12 und Bohrerschaft 14 vergrößert, so daß die stoffschlüssige Verbindung höher belastbar ist und eine bessere Kraftübertragung zwischen den beiden Elementen möglich ist. Die Verbindung von Zapfen 38 und Bohrung 36 kann auch als Preßpassung ausgebildet sein. Durch eine nicht rotationssymmetrische Ausbildung von Zapfen 38 und Bohrung 36, etwa mit einem ovalem Querschnitt, wie in Figur 3 gezeigt, kann zusätzlich eine formschlüssige Verbindung zwischen Bohrkopf 12 und Bohrerschaft 14 erreicht werden, um die stoffschlüssige Verbindung zu entlasten ist. Eine weitere Funktion der Verbindung zwischen Zapfen und Bohrung besteht in der Zentrierung des Bohrkopfes 12 beim Zusammenfügen von Bohrerschaft 14 und Bohrkopf 12.

Die Anordnung der Trennebene zwischen der Bohrkopf und dem Bohrerschaft ist in den Figuren nur beispielhaft gezeigt. Je nach den jeweiligen Anforderungen kann die Trennebene näher an der Bohrerspitze oder in größerem Abstand von dieser angeordnet sein. In jedem Fall beginnt die Transportschnecke bereits auf dem Bohrkopf, um vor der Verbindungsstelle zwischen Bohrkopf und Bohrerschaft eine gute Abfuhr des Bohrguts zu gewährleisten.

Selbstverständlich sind auch andere Ausgestaltungen des erfindungsgemäßen Bohrers möglich. So kann der Bohrkopf etwa mit zusätzlichen Schneiden an der Stirnfläche oder mit Diamant- oder anderen Einsätzen versehen sein.

## Patentansprüche

1. Bohrer (10) mit einem Bohrerschaft (14) aus Metall und einem Bohrkopf (12) aus Hartmetall, der mit dem Bohrerschaft stoffschlüssig verbunden ist, wobei an der Mantelfläche des Bohrerschafts eine Transportschnecke (32) zur Abfuhr von zerkleinertem Bohrgut ausgebildet ist, **dadurch gekennzeichnet, daß** sich die Transportschnecke (32) bis auf den Bohrkopf (12) erstreckt.

2. Bohrer nach Anspruch 1, **dadurch gekennzeichnet, daß** am freien Ende des Bohrkopfes (12) im wesentlichen radial verlaufende Hauptschneiden (20) ausgebildet sind, an die sich die Transportschnecke (32) anschließt.

3. Bohrer nach einem der vorhergehenden Ansprüche, **dadurch gekennzeichnet, daß** der Bohrkopf (12) auf seiner an den Bohrerschaft (14) grenzenden Seite (16) eine Ausnehmung (36) aufweist, in die ein am Bohrerschaft (14) ausgebildeter Zapfen (38) greift.

4. Bohrer nach Anspruch 3, **dadurch gekennzeichnet, daß** die Ausnehmung (36) und der Zapfen (38) jeweils einen zueinander passenden, nicht rotationssymmetrischen Querschnitt aufweisen.

5. Bohrer nach einem der vorhergehenden Ansprüche, **dadurch gekennzeichnet, daß** der Bohrkopf mit dem Bohrerschaft verschweißt ist.
